# FASCICULE DE BREVET EUROPEEN

(11) **EP 2 352 770 B1**
(45) Date de publication et mention de la délivrance du brevet: **06.05.2015**
(21) Numéro de dépôt: 09828704.8
(22) Date de dépôt: 18.03.2009
(51) Int. Cl.: C08F 8/44, C08F 8/00, C08F 20/56, C08F 26/04, D21H 17/45, D21H 19/58, D21H 21/20

(54) **NOUVEAU PROCEDE DE PREPARATION DE COPOLYMERES D'ACRYLAMIDE PAR REACTION DE DEGRADATION D'HOFMANN**
NEUARTIGES VERFAHREN ZUR HERSTELLUNG VON ACRYLAMID-COPOLYMEREN DURCH EINE HOFMANN-UMLAGERUNGS-REAKTION
NOVEL METHOD FOR PREPARING ACRYLAMIDE COPOLYMERS BY HOFMANN DEGRADATION REACTION

(30) Priorité: 27.11.2008 FR 0858037
(43) Date de publication de la demande: 10.08.2011
(73) Titulaire: S.P.C.M. SA, 42160 Andrézieux Bouthéon (FR)
(72) Inventeur: HUND, René, F-42390 Villars (FR); AURIANT, Christophe, F-42000 Saint Etienne (FR)
(74) Mandataire: Denjean, Eric
(86) Numéro de dépôt international: PCT/FR2009/050456
(87) Numéro de publication internationale: WO 2010/061082

(56) Documents cités:
- WO-A2-2008/107620
- US-A- 4 110 520

## Description

L'invention concerne un procédé amélioré de préparation de (co)polymères cationiques ou amphotères d'acrylamide. Plus précisément, l'invention est relative à l'obtention de (co)polymères cationiques ou amphotère d'acrylamide par réaction de dégradation dite d'Hofmann en solution aqueuse sur un (co)polymère base et est caractérisé en ce que le milieu réactionnel, avant l'ajout des réactifs à savoir hypohalogénure et hydroxyde, contient une proportion importante d'ions cationiques polyvalents.

Les exemples des polymères cationiques d'acrylamide connus dans l'art antérieur sont de différents types : il s'agit le plus fréquemment de co-polymères à base d'acrylamide et de monomères cationiques, ce peut être également des polymères dits de Mannich (le polymère d'acrylamide réagit avec du formaldehyde et une amine secondaire puis est quaternisé), des polymères glyoxalés ou des polymères d'acrylamide sur lesquels on a effectué une dégradation d'Hofmann.

Parmi tous ces polymères, seuls ceux obtenus par réaction de dégradation d'Hofmann présentent des propriétés spécifiques non partagées en terme de densité de charge cationique.

### La dégradation d'Hofmann

Cette réaction découverte par Hofmann à la fin du dix neuvième siècle, permet de passer d'une fonction amide à une fonction amine primaire par élimination d'un atome de carbone. Le mécanisme réactionriel est détaillé ci-dessous.

En présence d'une base (e.g. : NaOH), un proton est arraché à l'amide.

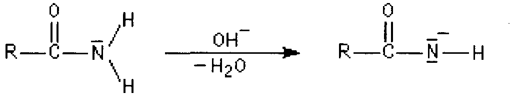

L'ion amidate formé réagit alors avec le chlore actif (Cl2) de l'hypochlorite (e.g. : NaClO qui est en équilibre : 2 NaOH + C12 ↔ NaOCl + NaCl + H2O) pour donner un N-chloramide. La base (NaOH) arrache un proton du chloramide pour former un anion. L'anion perd un ion chlorure pour former un nitrène qui subit une transposition en isocyanate.

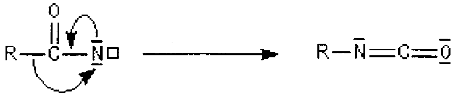

Par réaction entre l'ion hydroxyde et l'isocyanate, un carbamate est formé.

R-N̅=C=0̅ + OH⁻ → R-NH-CO₂⁻

Après décarboxylation (élimination de CO₂ en présence d'acide, e.g. : HCI) à partir du carbamate, on obtient une amine primaire sous la forme d'un sel d'acide.

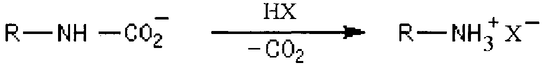

Pour la conversion de tout ou partie des fonctions amide d'un (co)polymère d'acrylamide en fonction amine, 2 facteurs principaux interviennent (exprimés en rapports molaires). Il s'agit de : - Alpha = (hypohalogénure d'alcalin et/ou alcalino terreux / acrylamide) et - Beta = (hydroxyde d'alcalin et/ou alcalino terreux / hypohalogénure d'alcalin et/ou alcalino terreux).

Les polymères obtenus par réaction de dégradation d'Hofmann sont notamment utilisés dans les procédés de fabrication de papier. De manière générale, on sait que pour être efficace comme agent de résistance, les (co)polymères mis en oeuvre doivent être sous une forme la plus cationique possible et donc présenter un degré de dégradation élevé. En effet, en fonction du degré Alpha de dégradation, il est possible de générer des variations de cationicité liées à la quantité de fonctions amines produites sur le squelette carboné du (co)polymère. Par ailleurs, on sait que lorsque le produit obtenu par réaction de dégradation d'Hofmann est amphotère, celui-ci peut également être utilisé pour améliorer la rétention de charge lors de la fabrication de papier ou carton.

Jusqu'à récemment, seuls des procédés très lourds mettant en oeuvre, in situ, une unité de fabrication de produit de dégradation d'Hofmann (EP 377313) ou des procédés mettant en oeuvre un autre polymère (base de type (co)polymère de N-vinylformamide suivie d'une hydrolyse) lui-même relativement coûteux (US 2004/118540), avaient été mis en place.

Il a fallu attendre début 2005 et le brevet WO2006075115 de la demanderesse pour qu'enfin une solution industrielle viable soit proposée. L'invention y est caractérisée, en partie, par le fait que le produit de dégradation d'Hofmann revendiqué est un polymère organique produit à une concentration supérieure à 3,5% en poids et de préférence supérieure à 4,5%. Même si les performances de résistance à sec sont fortement améliorées, les polymères produits restent instables dans le temps et présentent un poids moléculaire très faible conférant au (co)polymère un intérêt très limité pour des applications telles que le drainage ou la floculation.

Le brevet WO2008/107620 de la demanderesse avait permis de résoudre cette problématique de stabilité et de faibles performances en égouttage par la modification de la nature de l'hypochlorite (utilisation d'hypochlorite de calcium). Cependant l'inventeur devait alors faire face à une faible disponibilité en hypochlorite de calcium, à un taux d'impuretés important dans le produit final (le grade le plus pur d'hypochlorite de calcium présente un taux d'impuretés minimum de 20%), ainsi qu'à des difficultés de stockage, transport et manipulation d'une poudre classée comme dangereuse.

Le problème que se propose de résoudre l'invention est donc de proposer un procédé amélioré de préparation de (co)polymères cationiques ou amphotères d'acrylamide tout en conservant audits polymères leurs caractéristiques de stabilité et de poids moléculaire élevé.

### Description de l'invention

Le Demandeur a constaté de façon surprenante que les avantages obtenus selon le brevet WO2008/107620 peuvent également être obtenus par l'introduction dans le milieu réactionnel, avant l'ajout des réactifs à savoir hypohalogénure et hydroxyde, d'une quantité significative d'ions cationiques polyvalents. En outre, ce procédé présente la possibilité d'utiliser un hypochlorite classique, à savoir l'eau de javel, facilement disponible sur le marché, contenant moins d'impuretés et de manipulation plus simple car n'imposant pas de contact direct avec le personnel (piping) et faisant l'impasse sur l'étape contraignante de pré-dissolution de l'hypochlorite de calcium solide.

La demanderesse a trouvé et mis au point un procédé de préparation de (co)polymères cationiques ou amphotères dérivés d'acrylamide par réaction de dégradation dite d'Hofmann en solution aqueuse en présence d'un hydroxyde d'alcalin et/ou d'alcalino-terreux et d'un hypohalogénure d'alcalin sur un copolymère base, qui se caractérise en ce que la solution de copolymère base sur laquelle est effectuée la réaction, contient un sel cationique polyvalent représentant au moins 0,5% en poids, de préférence de 2 à 10% en poids du copolymère base.

Alors même que ces produits sont connus dans l'art antérieur pour leur instabilité à des coefficients Alpha inférieurs à 1, on ne pouvait donc pas présumer que la seule introduction d'un sel d'ion cationique polyvalent puisse conférer au (co)polymère cationique dérivé d'acrylamide obtenu selon l'invention :
- non seulement une très grande stabilité dans le temps,
- mais également une viscosité élevée supérieure à 30 cps (à une concentration de 9%, à 25°c, Brookfield LV1, 60 rpm), de préférence supérieure à 40 cps.

Comme déjà dit, le copolymère obtenu par réaction de dégradation dite d'Hofmann doit être en tout ou partie obtenu en présence, en tant qu'hypohalogénure, d'un hypohalogénure d'alcalin.

Dans un mode de réalisation préféré, le copolymère est obtenu par réaction de dégradation dite d'Hofmann en présence exclusive, en tant qu'hypohalogénure, d'un d'hypohalogénure d'alcalin, avantageusement l'hypochlorite de sodium.

Sans chercher à établir une quelconque théorie, il semble que la seule présence de sels d'ions cationiques polyvalents dans la solution de (co)polymère base lors la réaction de dégradation d'Hofmann permette de limiter la sensibilité de la chaîne polymérique inhérente aux conditions de la réaction de dégradation d'Hofmann, préservant ainsi son poids moléculaire et sa stabilité.

Selon une autre caractéristique, le coefficient Alpha hypohalogénure/monomère non ionique utilisé pour la préparation des polymères de l'invention est supérieur à 0,1, voire à 0,3, avantageusement supérieur à 0,5 et de préférence inférieur à 1.

Le copolymère obtenu selon l'invention peut être utilisé avec succès pour la fabrication de papiers et cartons d'emballage, de papiers supports de couchage, de tout type de papiers, cartons ou analogues nécessitant l'utilisation d'un polymère cationique et comme agent de coagulation.

Selon une autre caractéristique, le produit de dégradation d'Hofmann est produit à une concentration supérieure à 4% en poids, de préférence supérieure à 8%, avantageusement supérieure à 9%.

De même, le copolymère de l'invention a une densité de charge cationique de préférence supérieure à 2 meq/g et avantageusement supérieure à 5 meq/g.

### Le (co)polymère cationique ou amphotère dérivé d'acrylamide

Il est obtenu par réaction de dégradation d'Hofmann sur un (co)polymère base.

### Le copolymère « base »

En pratique, le polymère base utilisé est constitué :
- d'au moins un monomère non ionique choisi dans le groupe comprenant l'acrylamide (et/ou le méthacrylamide), le N,N diméthylacrylamide et/ou l'acrylonitrile, préférentiellement l'acrylamide, avantageusement au moins 5 moles% dudit monomère,
- optionnellement d'au moins :
   ▪ un monomère éthylénique cationique non saturé, choisi préférentiellement dans le groupe comprenant les monomères de type dialkylaminoalkyl (meth)acrylamide, diallylamine, methyldiallylamine et leurs sel d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
   ▪ et/ou un monomère non ionique choisi préférentiellement dans le groupe comprenant le N-vinyl acetamide, N-vinyl formamide, la N-vinylpyrrolidone et/ou le vinyl acétate,
   ▪ et/ou un monomère anionique de type acide ou anhydride choisi dans le groupe comprenant l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sel < 50 moles %.

Avantageusement, le polymère base est constitué de préférence:
- d'acrylamide,
- et d'au moins un co-monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, de préférence le chlorure de dimethyldiallyl ammonium.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 molles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

Selon une caractéristique préférée de l'invention, le copolymère base est ramifié.

On pourra effectuer la ramification de préférence durant (ou éventuellement après) la polymérisation du copolymère « base », en présence d'un agent ramifiant polyfonctionnel et éventuellement d'un agent de transfert. On trouvera ci dessous une liste non limitative des ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la réticulation.

En pratique, l'agent de ramification est le méthylène bis acrylamide (MBA) introduit avantageusement à raison de cinq à cinquante milles (5 à 50000) parties par million en poids, de préférence 5 à 10000, avantageusement de 5 à 5000. Avantageusement, l'agent de ramification est le méthylène bis acrylamide (MBA).

On trouvera ci dessous une liste non limitative des agents de transfert : alcool isopropylique, hypophosphite de sodium, mercaptoethanol, etc...

L'homme de métier saura choisir la meilleure combinaison en fonction de ses connaissances propres et de la présente description, ainsi que des exemples qui vont suivre.

Le copolymère servant de base à la réaction de dégradation d'Hofmann ne nécessite pas le développement de procédé de polymérisation particulier. Les principales techniques de polymérisation, bien connues par l'homme de métier et pouvant être utilisées sont : la polymérisation par précipitation, la polymérisation en émulsion (aqueuse ou inverse) suivie ou non d'une étape de distillation et/ou de pulvérisation sèche (spray drying), et la polymérisation en suspension ou la polymérisation en solution, ces deux techniques étant préférées.

Cette base est caractérisée en ce qu'elle a un poids moléculaire supérieur à 5000 g/mol et sans limitation maximum.

Il est également possible d'ajouter dans la solution de copolymère base, avant ou pendant la réaction de dégradation d'Hofmann certains additifs qui sont susceptibles de réagir sur les fonctions isocyanates du polymère générées en cours de dégradation. De manière générale, il s'agit de molécules portant des fonctions chimiques nucléophiles telles que des fonctions hydroxyle, amine...A titre d'exemples, les additifs en question peuvent donc être de la famille : des alcools, des polyols (e.g. : amidon), des polyamines, des polyéthylène imines...

Avant d'être dégradé, selon l'invention on incorpore dans la solution de copolymère base un (ou plusieurs) sel d'ion cationique polyvalent (à savoir de charge cationique supérieure ou égale à 2) et ce, à une concentration minimum de 0,5% massique, de préférence de 2 à 10% massique, par rapport au (co)polymère base. Parmi les sels d'ions cationiques polyvalents pouvant être utilisés on préfèrera les ions divalents avec de préférence les ions Ca++, Mg++, Zn++, Cu++, et/ou Ba++ et/ou Al+++. Il a aussi été trouvé que les sels trivalents comme l'aluminium pouvaient présenter un intérêt.

Ces sels se présentent de préférence sous forme d'halogénure, de sulfate, de carbonate, de nitrate, de phosphate, de nitrite, de citrate ou encore d'acétate. Avantageusement, les sels d'ions cationiques polyvalents sont ajoutés à la solution de (co)polymère base après la polymérisation. Dans une variante non préférée de l'invention, l'incorporation de ces sels peut également s'effectuer avant ou en cours de polymérisation du (co)polymère base.

### La réaction de dégradation d'Hofmann sur le copolymère « base »

La réaction d'Hofmann nécessite la conversion des fonctions amide en fonction amine en faisant intervenir 2 facteurs principaux (exprimés en rapports molaires) :
- Alpha = (hypohalogénure d'alcalin / (meth)acrylamide)
- Beta = (hydroxyde d'alcalin et/ou alcalino-terreux / hypohalogénure d'alcalin)

A partir d'une solution de copolymère « base » précédemment décrit de concentration comprise entre 10 et 40% en poids, de préférence entre 20 et 40%, on détermine la quantité molaire de fonction (meth)acrylamide totale. On choisit alors le niveau de dégradation Alpha souhaité (qui correspond au degré de fonction amine voulu), qui permet de déterminer la quantité sèche d'hypohalogénure d'alcalin et ensuite le coefficient béta, qui permet de déterminer la quantité sèche d'hydroxyde d'alcalin et/ou alcalino-terreux.

On prépare alors une solution d'hypohalogénure et d'hydroxyde d'alcalin et/ou alcalino-terreux à partir des rapports alpha et béta. Selon l'invention, les réactifs de préférence utilisés sont l'hypochlorite de sodium (eau de javel) et la soude (hydroxyde de sodium).

Afin de stabiliser les fonctions amines qui vont être produites, on peut éventuellement rajouter, dans le réacteur contenant le polymère base, un (ou éventuellement plusieurs) dérivé d'ammonium quaternaire tel que cela est décrit dans le brevet JP 57077398 et bien connu par l'homme de métier, celui-ci a en effet pour but d'éviter la réaction entre les fonctions amines et les fonctions amides résiduelles. On notera, de plus, que l'ajout de ces agents peut être effectué en séparé, en simultané, en mélange ou non, dans un ordre quelconque d'introduction et en un ou plusieurs points d'injection.

L'augmentation en cationicité du copolymère base s'effectue lors de la dégradation dite d'Hofmann, par l'utilisation, en totalité ou non, d'un hypohalogénure d'alcalin.

De plus, il est également possible de proposer les copolymères cationiques ou amphotères d'acrylamide de l'invention obtenus par réaction de dégradation dite d'Hofmann sous la forme d'un mélange avec un ou plusieurs autre(s) polymère(s) synthétique(s) de plus haut poids moléculaire et de préférence de charge non ionique ou cationique.

De même, bien que préparés en solution, les polymères de l'invention peuvent également être proposés sous forme solide. Dans ces conditions, la forme solide contient non seulement le copolymère, mais également une faible proportion de sel obtenue à l'issue de la réaction de dégradation d'hofmann. En pratique, ils sont obtenus entre autres par des procédés consistant à isoler la matière active de la solution précédemment citée. Les principales techniques d'isolation alors utilisées sont celles du séchage par atomisation ou pulvérisation (qui consiste à créer un nuage de fines gouttelettes dans un courant gazeux chaud pendant une durée contrôlée), du séchage à tambour, des sécheurs à lit fluidisé...

Comme déjà dit, les copolymères obtenus selon le procédé de l'invention trouvent une application plus spécifique dans les procédés de fabrication de papier pour leur propriété d'égouttage, de rétention de charge et/ou pour améliorer les performances de résistance à sec.

Les exemples suivants illustrent l'invention sans toutefois en limiter la portée.

### EXEMPLES

### Exemples 1 : copolymère cationique dérivé d'acrylamide

Un (co)polymère cationique dérivé d'acrylamide a été obtenu par réaction dégradation d'Hofmann sur un copolymère base d'acrylamide et de chlorure de dimethyldiallyl ammonium (Dadmac) ramifiés (MBA : 600ppm / à la matière active) en solution aqueuse à 25% de concentration (viscosité : 3000 cps).

Dans cette solution de polymère base est dissous au préalable, un sel de calcium sous la forme de chlorure de calcium (CaCl₂) à hauteur de 2% en poids par rapport au copolymère base.

La réaction de dégradation s'effectue sur la solution ainsi préparée à la température de 25°C à l'aide d'hypochlorite de sodium et d'hydroxyde de sodium dans des proportions nécessaires à obtenir un alpha partiel (0,7).

Le produit intermédiaire obtenu est alors décarboxylé dans un excès d'acide chlorhydrique puis ajusté en pH à la soude (de l'ordre de 4).

Le (co)polymère cationique dérivé d'acrylamide ainsi réalisé présente une viscosité bulk de 85cps (à 25°c, Brookfield LV1, 60 rpm) et une concentration de 10%. Il satisfait au test de stabilité (énoncé dans le brevet WO 2008/107620) et présente des améliorations en CSF comparables aux produits du brevet WO 2008/107620.

### Exemple 2 copolymère amphotère dérivé d'acrylamide

Un (co)polymère amphotère dérivé d'acrylamide a été obtenu par réaction de dégradation d'Hofmann sur un copolymère base d'acrylamide, de chlorure de dimethyldiallyl ammonium (Dadmac) et d'acide acrylique ramifiés (MBA : 300ppm / à la matière active) en solution aqueuse à 25% de concentration (viscosité : 3500 cps).

Dans cette solution de polymère base est dissous au préalable, un sel de calcium sous la forme de chlorure de calcium (CaCl₂) à hauteur de 2% en poids par rapport au copolymère base.

La réaction de dégradation s'effectue sur la solution ainsi préparée à la température de 25°C à l'aide d'hypochlorite de sodium et d'hydroxyde de sodium dans des proportions nécessaires à obtenir un alpha partiel (0,7).

Le produit intermédiaire obtenu est alors décarboxylé dans un excès d'acide chlorhydrique puis ajusté en pH à la soude (de l'ordre de 4).

Le (co)polymère amphotère dérivé d'acrylamide ainsi réalisé présente une viscosité bulk de 38 cps (à 25°c, Brookfield LV1, 60 rpm), une concentration de 10% et satisfait également au test de stabilité tel qu'énoncé dans l'exemple 1.

## Revendications

1. Procédé de préparation de (co)polymères cationiques ou amphotères dérivés d'acrylamide par réaction de dégradation dite d'Hofmann en solution aqueuse en présence d'un hydroxyde d'alcalin et/ou d'alcalino-terreux et d'un hypohalogénure d'alcalin sur un copolymère base, **caractérisé en ce que** la solution de copolymère base sur laquelle est effectuée la réaction contient un sel cationique polyvalent représentant au moins 0,5% en poids, de préférence de 2 à 10% en poids du copolymère base.

2. Procédé selon la revendication 1, **caractérisé en ce que** l'hypohalogénure d'alcalin est exclusivement de l'hypochlorite de sodium.

3. Procédé selon la revendication 1, **caractérisé en ce que** les sels d'ions cationiques polyvalents sont choisis dans le groupe comprenant les sel d'ions Ca++, Mg++, Zn++, Cu++, Ba++ et/ou Al +++.

4. Procédé selon la revendication 1, **caractérisé en ce que** les sels d'ions cationiques polyvalents sont choisis dans le groupe comprenant les sels d'halogénure, de sulfate, de carbonate, de nitrate, de phosphate, de nitrite, de citrate et d'acétate.

5. Procédé selon la revendication 1, **caractérisé en ce que** les sels d'ions cationiques polyvalents sont ajoutés à la solution de (co)polymère base après la polymérisation.

6. Procédé selon la revendication 1, **caractérisé en ce que** le polymère base est constitué :
- d'au moins un monomère non ionique choisi dans le groupe comprenant l'acrylamide (et/ou le méthacrylamide), le N,N diméthylacrylamide et/ou l'acrylonitrile,
- optionnellement d'au moins :
▪ un monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides.
▪ et/ou un monomère non ionique choisi dans le groupe comprenant le N-vinyl acetamide, N-vinyl formamide, la N-vinylpyrrolidone et/ou le vinyl acétate,
▪ et/ou un monomère anionique de type acide ou anhydride choisi dans le groupe comprenant l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sel < 50% molaire.

7. Procédé selon la revendication 1, **caractérisé en ce que** le polymère base est constitué de préférence:
- d'acrylamide,
- et d'au moins un monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, de préférence le chlorure de dimethyldiallyl ammonium.

8. Procédé selon la revendication 1, **caractérisé en ce que** le copolymère base est ramifié durant ou éventuellement après sa polymérisation, en présence d'un agent ramifiant polyfonctionnel et éventuellement d'un agent de transfert.

9. Procédé selon la revendication 1, **caractérisé en ce que** lesdits (co)polymères cationiques ou amphotères dérivés d'acrylamide sont obtenus à une concentration supérieure à 4% en poids, de préférence supérieure à 8%, avantageusement supérieure à 9%.

10. Procédé selon la revendication 1, **caractérisé en ce que** lesdits (co)polymères cationiques ou amphotères dérivés d'acrylamide ont une densité de charge cationique de préférence supérieure à 2 meq/g et avantageusement supérieure à 5 meq/g.

## Patentansprüche

1. Verfahren zur Herstellung kationischer oder amphoterer (Co)polymere, die von Acrylamid abgeleitet sind, durch eine sogenannte Hofmann-Abbaureaktion in wässriger Lösung im Beisein eines Alkali- und/oder Erdalkalihydroxids und eines Alkalihypohalogenids an einem Basiscopolymer, **dadurch gekennzeichnet, dass** die Basiscopolymerlösung, an der die Reaktion vorgenommen wird, ein polyvalentes kationisches Salz enthält, das mindestens 0,5 Gew.-%, vorzugsweise 2 bis 10 Gew.-% des Basiscopolymers darstellt.

2. Verfahren nach Anspruch 1, **dadurch gekennzeichnet, dass** das Alkalihypohalogenid ausschließlich Natriumhypochlorit ist.

3. Verfahren nach Anspruch 1, **dadurch gekennzeichnet, dass** die polyvalenten kationischen Ionensalze aus der Gruppe ausgewählt sind, die Ionensalze Ca++, Mg++, Zn++, Cu++, Ba++ und/oder Al+++ umfasst.

4. Verfahren nach Anspruch 1, **dadurch gekennzeichnet, dass** die polyvalenten kationischen Ionensalze aus der Gruppe ausgewählt sind, die Halogenid-, Sulfat-, Carbonat-, Nitrat-, Phosphat-, Nitrit-, Citrat- und Acetatsalze umfasst.

5. Verfahren nach Anspruch 1, **dadurch gekennzeichnet, dass** die polyvalenten kationischen Ionensalze der Basis(co)polymerlösung nach der Polymerisation zugesetzt werden.

6. Verfahren nach Anspruch 1, **dadurch gekennzeichnet, dass** das Basispolymer besteht aus:
- mindestens einem nichtionischen Monomer, das aus der Gruppe ausgewählt ist, die Acrylamid (und/oder Methacrylamid), N,N-Dimethylacrylamid und/oder Acrylnitril umfasst,
- optional mindestens:
▪ ein nichtgesättigtes kationisches Ethylenmonomer, das aus der Gruppe ausgewählt ist, die Monomere der Art Dialkylaminoalkyl(meth)acrylamid, Diallylamin, Methyldiallylamin und deren quaternäre Ammonium- oder Säuresalze umfasst,
▪ und/oder ein nichtionisches Monomer, das aus der Gruppe ausgewählt ist, die N-Vinylacetamid, N-Vinylformamid, N-Vinylpyrrolidon und/oder Vinylacetat umfasst,
▪ und/oder ein anionisches Monomer der Art Säure oder Anhydrid, das aus der Gruppe ausgewählt ist, die (Meth)acrylsäure, Acrylamidmethylpropansulfonsäure, Itaconsäure, Maleinanhydrid, Maleinsäure, Methallylsulfonsäure, Vinylsulfonsäure und deren Salze < 50 Mol-% umfasst.

7. Verfahren nach Anspruch 1, **dadurch gekennzeichnet, dass** das Basispolymer vorzugsweise besteht aus:
- Acrylamid,
- und mindestens einem nichtgesättigten kationischen Ethylenmonomer, das aus der Gruppe ausgewählt ist, die Monomere der Art Dialkylaminoalkyl(meth)acrylamid, Diallylamin, Methyldiallylamin und deren quaternären Ammonium- oder Säuresalze umfasst, vorzugsweise Dimethyldiallylammoniumchlorid.

8. Verfahren nach Anspruch 1, **dadurch gekennzeichnet, dass** das Basiscopolymer während oder gegebenenfalls nach seiner Polymerisation im Beisein eines polyfunktionellen Verzweigungsmittels und gegebenenfalls eines Übertragungsmittels verzweigt wird.

9. Verfahren nach Anspruch 1, **dadurch gekennzeichnet, dass** die von Acrylamid abgeleiteten amphoteren oder kationischen (Co)polymere in einer Konzentration von über 4 Gew.-%, vorzugsweise über 8 Gew.-%, vorteilhafter Weise über 9 Gew.-% gewonnen werden.

10. Verfahren nach Anspruch 1, **dadurch gekennzeichnet, dass** die von Acrylamid abgeleiteten amphoteren oder kationischen (Co)polymere eine kationische Ladungsdichte von vorzugsweise über 2 meq/g, und vorteilhafter Weise über 5 meq/g haben.

## Claims

1. A process for preparing cationic or amphoteric (co)polymers derived from acrylamide by a degradation reaction called a Hofinann degradation in aqueous solution in the presence of an alkali and/or alkaline-earth metal hydroxide and an alkali metal hypohalide on a base copolymer, **characterized in that** the solution of base copolymer on which the reaction is performed contains a polyvalent cationic salt representing at least 0.5% by weight, preferably from 2 to 10% by weight, of the base copolymer.

2. The process according to claim 1, **characterized in that** the alkali metal hypohalide is exclusively sodium hypochlorite.

3. The process according to claim 1, **characterized in that** polyvalent cationic ion salts are selected from the group comprising salts of Ca++, Mg++, Zn++, Cu++, Ba++ and/or Al +++ ions.

4. The process according to claim 1, **characterized in that** the salts of polyvalent cationic ions are selected from the group comprising halide, sulfate, carbonate, nitrate, phosphate, nitrite, citrate and acetate salts.

5. The process according to claim 1, **characterized in that** the salts of polyvalent cationic ions are added to the solution of base (co)polymer after the polymerization.

6. The process according to claim 1, **characterized in that** the base polymer consists of:
- at least one non-ionic monomer selected from the group comprising acrylamide (and/or methacrylamide), N,N dimethylacrylamide and/or acrylonitrile,
- optionally at least:
▪ one cationic unsaturated ethylenic monomer, selected from the group comprising monomers of the dialkylaminoalkyl (meth)acrylamide, diallylamine, methyldiallylamine type, and quaternary ammonium or acid salts thereof.
▪ and/or a non-ionic monomer selected from the group comprising N-vinyl acetamide, N-vinyl formamide, N-vinylpyrrolidone and/or vinyl acetate,
▪ and/or an anionic monomer of the acid or anhydride type selected from the group comprising (meth)acrylic acid, acrylamidomethylpropane sulfonic acid, itaconic acid, maleic anhydride, maleic acid, methallyl sulfonic acid, vinyl-sulfonic acid and < 50% molar salts thereof

7. The process according to claim 1, **characterized in that** the base polymer consists preferably:
- of acrylamide,
- and of at least one cationic unsaturated ethylenic monomer, selected from the group comprising monomers of the dialkylaminoalkyl (meth)acrylamide, diallylamine, methyldiallylamine type, and quaternary ammonium or acid salts thereof, preferably dimethyldiallyl ammonium chloride.

8. The process according to claim 1, **characterized in that** the base copolymer is branched during or optionally after its polymerization, in the presence of a polyfunctional branching agent and optionally a transfer agent.

9. The process according to claim 1, **characterized in that** said cationic or amphoteric (co)polymers derived from acrylamide are obtained at a concentration greater than 4% by weight, preferably greater than 8%, advantageously greater than 9%.

10. The process according to claim 1, **characterized in that** said cationic or amphoteric (co)polymers derived from acrylamide have a cationic charge density preferably greater than 2 meq/g and advantageously greater than 5 meq/g.
